# EUROPEAN PATENT SPECIFICATION

(11) **EP 1 300 672 B1**
(45) Date of publication and mention of the grant of the patent: **28.04.2010**
(21) Application number: 02256997.4
(22) Date of filing: 08.10.2002
(51) Int. Cl.: G01N 21/53, G01C 3/08

(54) **Improvements in transmission measuring apparatuses**
Verbesserungen an Transmissionsmessgeräten
Amélioration des performances d'appareils de mesure de transmission optique

(30) Priority: 08.10.2001 AU PR813101
(43) Date of publication of application: 09.04.2003
(60) Divisional application: 09166589.3
(73) Proprietor: TELVENT AUSTRALIA PTY LTD, Osborne Park WA 6017 (AU)
(72) Inventor: Rakoczy, Steve, Osborne Park, W.A 6017 (AU); McGuinness, Steven T., Osborne Park, W.A.6017 (AU)
(74) Representative: Vernout, Robert

(56) References cited:
- US-A- 4 520 360
- US-A- 4 605 302
- US-A- 5 504 577
- US-A- 5 787 385

## Description

### Field of the Invention

This invention relates to a transmissometer in accordance with the preamble of claim 1. Such a transmissometer is disclosed in the "Manual of Runway Visual Range Observing and Reporting Practices, second edition - 2000". Transmissometers are used for measurement of visibility in air, and in particular loss of visibility due to airborne particles.

### Background Art

A transmissometer measures visual range, giving an indication of the distance at which an object can be visually detected. Transmissometers are used in applications such as in airports where the amount of visibility is of critical importance to safety.

A transmissometer typically includes two units, a light transmitter and a light receiver, which are placed a predetermined distance apart. This distance is referred to as the baseline.

The transmissometer of US-A-5787385 is of a different, reflecting type, wherein the transmitter and receiver units are fixedly placed together on a plate assembly, and wherein a multitude of reflectors is placed predetermined distances from the assembly to reflect the light emitted from the assembly back to said assembly. Said transmissometer comprises servomotors controlled by processor means for switching the direction of the assembly between said reflectors. -

The light transmitter generates light, typically a pulse of light, which is received at the light receiver. The light receiver measures the intensity of the light received from the light transmitter and this intensity measurement is used to calculate the current visual range.

The light transmitter and light receiver each include a window through which transmitted light passes. The windows prevent ingress of contaminants that would degrade performance of the transmissometer. Contamination of the windows that are exposed to the external environment, such as from jet vapour or dust, effects the accuracy of the light sensing. As the contamination increases, the level of the light detected at the light receiver decreases, giving inaccurate results.

If the amount of contamination can be detected, this factor can be used to improve the measurement accuracy. A known method of measuring the amount of window contamination involves calculating a "contamination factor" by measuring the total internal reflection of the window. This is implemented by transmitting a light into the top of the window and measuring the intensity of light received at the bottom. The received light intensity correlates to the contamination factor, and is factored into measured light detected at the light receiver, to correct for losses caused by contamination.

Additionally, if the contamination can be reduced, this further improves the measurement accuracy. A known method of reducing window contamination is to provide air flow over the front of the window to reduce the contamination buildup. A blower or fan is used produce the airflow.

Whatever method is utilised, it will eventually become necessary to clean or replace the window, as contamination cannot be completely obviated.

Transmissometers used for the determination of visibility require the optical alignment of the light transmitter and the light receiver at each end of the baseline for correct operation, the baseline being the distance between the transmitter and receiver. This adjustment becomes very critical at longer baselines such 75 metres. The typical method of alignment comprises manual adjustment of screws or bolts to move the complete optical section of the light transmitter or receiver. This task can be difficult and is time consuming.

It is an object of this invention to provide a solution to at least one of the aforementioned problems.

Throughout the specification, unless the context requires otherwise, the word "comprise" or variations such as "comprises" or "comprising", will be understood to imply the inclusion of a stated integer or group of integers but not the exclusion of any other integer or group of integers.

### Disclosure of the Invention

In accordance with the invention there is provided a visibility transmissometer in accordance with claim 1, and the use of such transmissometer in accordance with claim 8.

The optical device may be a laser, a xenon strobe lamp, a detector, and may include lenses and mirrors.

Preferably said mechanism(s) is/are capable of controlling movement of said optical device(s) in two planes.

Preferably one or both said units include in said optical devices, a light reflector located in the light pathway; said light reflector(s) being movable by said mechanism to control the alignment of light transmitted via said light pathway and preferably control the alignment of received light.

Preferably said mechanism(s) is/are capable of controlling movement of said light reflector(s) in two planes.

Preferably said processor means is located in said light transmitter unit, and controls said mechanism in said light transmitter unit in response to a light level signal from said light receiver unit transmitted via said communications link.

Preferably said processor means includes additional processor means located in said light receiver unit, said additional processor means controlling said mechanism in said light receiver unit in response to a light level signal from said light receiver unit.

Preferably said mechanism includes a screw thread drive(s), and alignment is carried out or checked intermittently. Utilisation of screw thread drives (or worm drives) obviates the need for constant control over alignment.

Preferably said transmissometer includes a light transmissive window through which transmitted light passes, located in at least one of said units, and includes in at least one of said light transmitter unit and said light receiver unit, occlusion means to occlude at least a part of said light transmissive window when not in use.

Preferably said occlusion means includes a cover to cover said light transmissive window when not in use, and uncover said light transmissive window when measurements are being made.

Preferably said transmissometer includes a light transmissive window through which transmitted light passes, located in at least one of said units, said light transmissive window including at least one peelable transparent layer of film. In this manner, when the window needs to be cleaned, it can be accessed and the contaminated outer layer peeled off and removed from the transmissometer. This feature provides fast turnaround time for in-field servicing.

Preferably said transmissometer includes a light transmissive window through which transmitted light passes, located in at least one of said units, and incorporates in proximity to said light transmissive window, an electric field generating means located externally thereof. Preferably said electric field generating means includes a grid of wires located externally of said transmissometer.

### Brief Description of the Drawings

A preferred embodiment of the invention is described in the following description made with reference to the drawings in which:
Figure 1 is a schematic representation of a visibility transmissometer;
Figure 2 is a side view of part of a light transmitter unit (or receiver unit) according to the embodiment;
Figure 3 is a front view of the unit of figure 2;
Figure 4 is a block diagram of a controller for controlling movement of the windows in the light transmitter unit and in the light receiver unit;
Figure 5 is a block diagram of a controller for controlling alignment of the light transmitter unit and the light receiver unit;
Figure 6 is a side view of part of the light transmitter unit (or receiver unit) showing detail of the mechanism shown in figure 2; and ;
Figure 7 is a sequence of views showing operation of the mechanism shown in figures 2 and 6.

### Best Mode(s) for Carrying Out the Invention

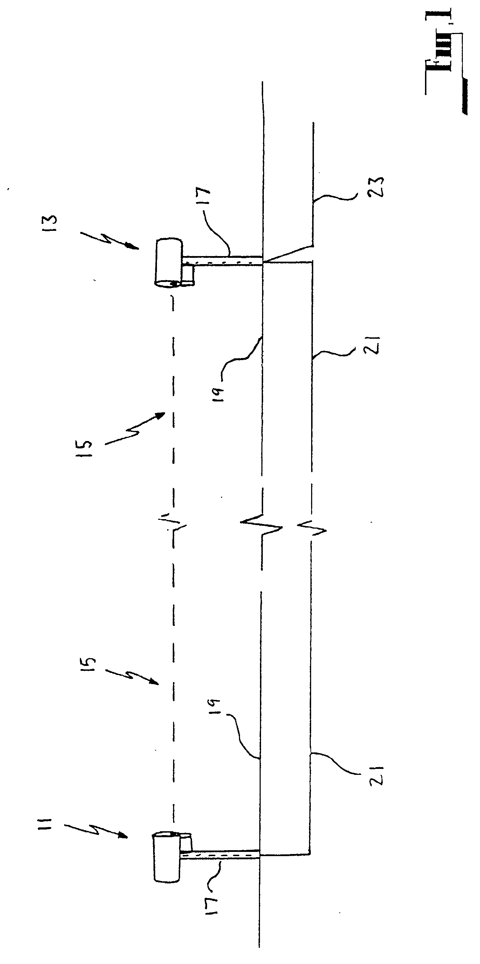

The embodiment is a visibility transmissometer, for use in measuring visibility in air at airports and the like, and is shown generally in figure 1. The visibility transmissometer has a light transmitter unit 11 and a light receiver unit 13. The light transmitter unit 11 is arranged to transmit light via a light pathway (indicated as 15) to the light receiver unit 13. The standard version of the visibility transmissometer uses in the light transmitter unit 11, a high stability Xenon flash lamp to generate the light required for the measurement by the light receiver unit 13. The visibility transmissometer can, in the light transmitter unit 11, use a laser source as an alternative option. The laser source of choice is a frequency doubled Nd:YAG laser operating at 532nm, which generates a green light which is close to the peak sensitivity of the human eye. The laser output is modulated at 10KHz so that the receiver is able to use highly selective filtering and therefore provide greater accuracy in its measurement.

The light transmitter unit 11 and light receiver unit 13 are each mounted on a pole 17 above the ground 19, located 75 metres apart from each other, this distance being known as the baseline. The light transmitter unit 11 and light receiver unit 13 are connected by a subterranean communications link 21 (which also includes power supply necessary for operation). A further subterranean communications link and power feed 23 connects the light receiver unit 13 to monitoring equipment which may be located in the control tower at the airport.

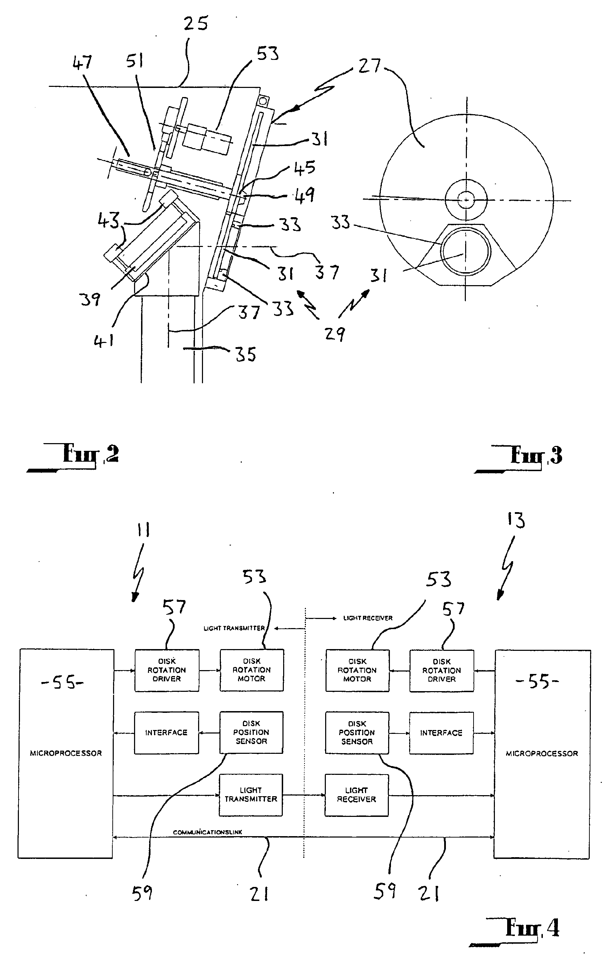

Mechanical detail of the part of the light transmitter unit 11 and light receiver unit 13 is shown in figures 2 and 3. The units have a housing 25 having a front panel 27. Located in the front panel 27, is a light transmissive aperture 29 which has located therein a light transmissive window 31. The units are sealed from the outside atmosphere, to prevent ingress by dust and other contamination which would degrade the performance of the transmissometer. The sealing is assisted by an annular seal 33 located around the periphery of the light transmissive aperture 29, against the light transmissive window 31.

The units 11, 13 include an optics component 35. In the light transmitter unit 11 the optics component 35 generates a light beam 37, in the light receiver unit 13 the optics component 35 receives the light beam 37. The optics component 35 also includes a mirror assembly 39 with a mirror 41 oriented generally to deflect the light beam 37 at an angle of 90°. The fine alignment of the mirror 41 is controlled in two dimensions, by two stepper motors indicated at 43.

The light transmissive window 31 is circular, and commensurate in size with the front panel 27. The light transmissive window 31 has a central mount 45, by which it is secured axially for rotation to a rotatable shaft 47 by a fastener 49.

The shaft 47 is driven via a mechanism 51 by a motor 53. The mechanism 51 includes an arrangement to draw the light transmissive window 31 away from the seal 33 prior to commencement of rotation, to prevent contamination of the seal and consequent smearing of the light transmissive window 31 with deposited contaminants.

The light transmissive window 31 has six notional positions, comprising a first operational portion, a normally obscured reference portion representative of a clean light transmissive window, and four further operational portions. Processor means in the form of microprocessors 55 are used to make necessary calculations and control the functions which will now be described.

The amount of contamination is determined by comparing the current level of the light pulse detected at the light receiver unit 13 with the amount of light received when the normally obscured reference portion of the light transmissive window 31, being a reference window of clean glass, is used. This is achieved by temporarily replacing the current operational portion of the light transmissive window 31, both at the light transmitter unit 11 and the light receiver unit 13, with the normally obscured reference portion of the light transmissive window 31. A light flash is then generated from the light transmitter unit 11 and the value of the intensity detected at the light receiver unit 13 is stored and then compared with the value of intensity that was received before the normally obscured reference portions of the light transmissive window 31 were inserted. This difference is used as the contamination factor by the software algorithm calculating true light intensity. The clean normally obscured reference portions of the light transmissive windows 31 at the light transmitter unit 11 and light receiver unit 13 are then replaced with the operational portions of the light transmissive windows 31 that had previously been used before the contamination check.

This compensation check is automatically carried out on a time interval that is configurable in the light transmitter unit 11 or light receiver unit 13, but which is determined by the local environment eg. dust etc. The difference in the light intensity received is used to compensate for the contamination for the period until the next scheduled check.

While the contamination compensation outlined above significantly extends the usable period for an operational portion of the window 31, the contamination level will still reach a stage where the current operational portion of the window 31 is no longer usable without cleaning of the window occurring

When an operational portion of the window 31 reaches the point of being unusable due to contamination, the current operational portion is replaced with a clean operational portion of the window 31, by rotating the window 31 to a new position. As only a small section, being the current operational portion of the window 31 is exposed to the outer environment at any time, the remainder of the window 31 is sealed from the outer environment, and can be rotated into use at a later date.

The motor 53 is controlled by the microprocessor 55. Whenever the window 31 is to be rotated, the motor 53 begins to turn, operating the mechanism which draws the window 31 away from the seal 33. After the window 31 is clear of the seal 33, the motor 53 rotates the window 31 until it reaches the required position, where the mechanism automatically pushes the window 31 back on to the seal. The new area of window 31 to be used as an operational portion now meets the seal 33 located on the front panel 27, sealing the interior of the unit 11, 13.

The window 31 as described gives the transmitter unit 11 or receiver unit 13, five operational portions and the reference portion used for the contamination detection, thus extending the period for maintenance of the window system by five times that of conventional contamination detection systems.

When the window 31 reaches a stage where all operational portions are severely contaminated, a maintenance person simply replaces the contaminated window 31 with a spare clean window 31. Access to the window 31 can be achieved by removing the front panel 27, and unscrewing the fastener 49. The contaminated window 31 can then be taken to a clean workshop environment and be cleaned, ready for use when required.

The rotation of the window 31 is controlled by microprocessor 55 in both the transmitter unit 11 and receiver unit 13 and occurs whenever a contamination check is carried out or when a new section of window 31 is to be used.

Outputs from the microprocessor 55 control a motor drive circuit 57, which operates the motor 53. The microprocessor 55 receives feedback from a location sensor 59 confirming when the disk is located in one of the correct positions. Coordination of the rotation between window in the light transmitter unit 11 and the window 31 in the light receiver unit 13 is via the communications link 21.

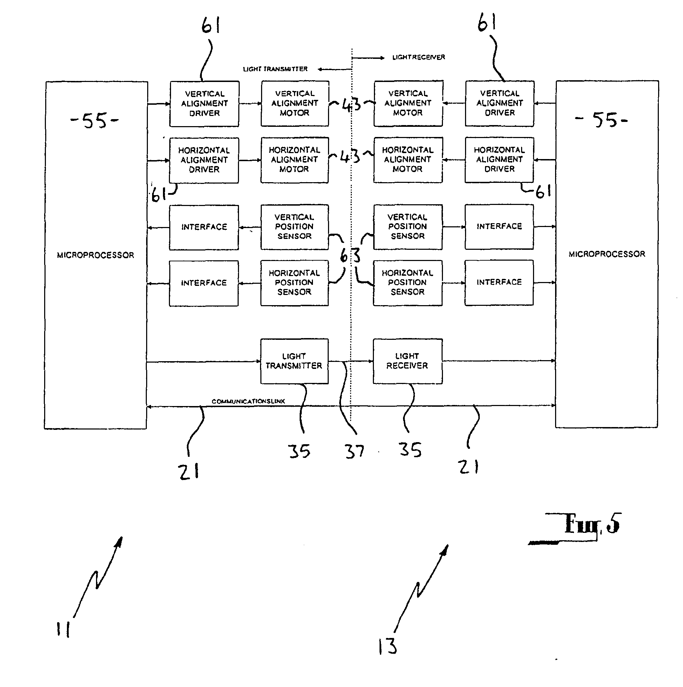

Referring to figure 5, elements relative to the automation of optical alignment of the optics components 35 in the light transmitter unit 11 and in the light receiver unit 13 are shown. Alignment is controlled by microprocessors 55 in light transmitter unit 11 and in the light receiver unit 13, which significantly simplifies the process compared with alignment in conventional transmissometers.

Alignment involves the movement of the mirror 41 of the optics components 35 by two motors 43. The motors 43 drive fine pitched threaded rods, giving vertical and horizontal adjustment to the alignment.

A command is given to the light transmitter unit 11 and the light receiver unit 13 via the communications link 23 and 21 for the alignment to occur. This command can be also be given from a switch, keypad etc located in the transmitter unit 11 and/or receiver unit 13. The alignment is then automatically performed at the transmitter unit 11 and the receiver unit 13, with the mirror being moved in a grid pattern until the optimum light intensity level is obtained at the light receiver unit 13 when a pulse of light is transmitted by the light transmitter unit. The optimum light level is where the received light is received centrally by the light receiver unit, and not at the edge of the beam. While this may or may not equate to maximum light, depending upon optics, this prevents erroneous errors that could occur where the edge of the beam is aligned to the receiver unit, and there is vibration which could cause the beam to move off-target.

The location of optimum light intensisty is then stored in the microprocessor memory and used as the aligned location for the transmitter unit 11 and receiver unit 13. The alignment can be checked or redone at any time by giving an alignment command.

The automated optical alignment of the transmitter or receiver is carried out by moving the mirror 41 in two axes that give horizontal and vertical adjustment. The alignment is carried out using the two stepper motors 43 controlled by the microprocessors 55, via motor drive interfaces 61.

Both horizontal and vertical adjustments have location sensors 63 to provide adjustment position to the microprocessors 55, enabling them to determine a zero position from which the current mirror location is determined by counting pulses used to actuate the stepper motors 43.

Coordination of the rotation between the transmitter and the receiver is via the communications link 21 between the microprocessor 55 in the transmitter unit 11 microprocessor 55 in the receiver unit 13.

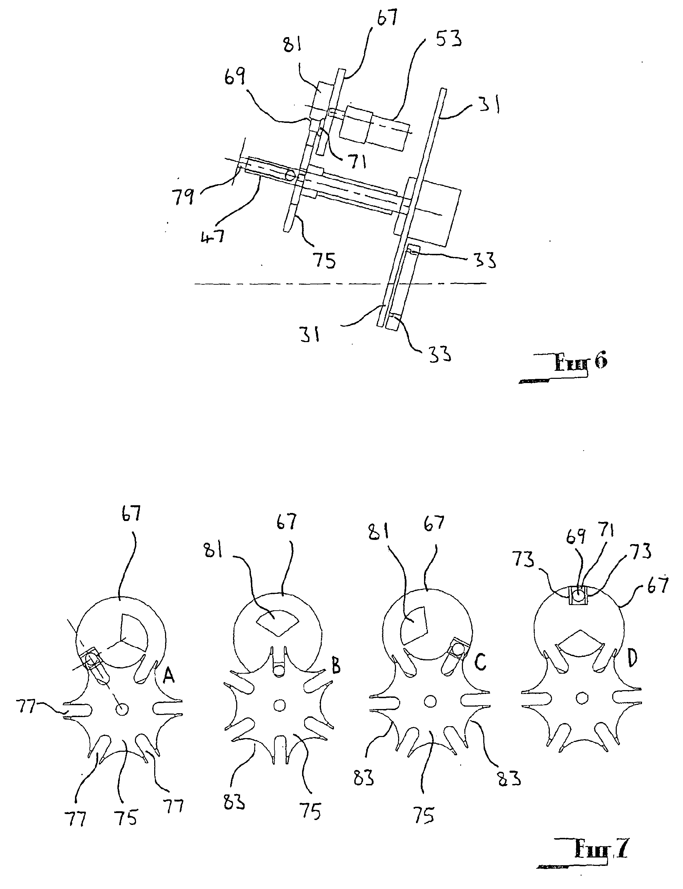

Referring to figures 6 and 7, the mechanism 51 will now be described in greater detail. The motor 53 drives a wheel 67 which has an eccentric pin 69 located on a raised platform 71. The raised platform 71 has two sloping approach surfaces 73. The wheel 67 co-operates with a hexagonal plate 75 having spaced guide slots 77 which receive the pin 69. The plate 75 is fixed to the shaft 47, and rotates with the window 31. The shaft 47 is mounted on a pin 79, and is biased by a spring-loading mechanism (not shown) between the pin 79 and the shaft 47, to urge the window 31 toward the annular seal 33, for sealing during normal operation. To move the window 31 to a different position requires a full rotation of the wheel 67 from the position (the normal operation position) shown in D in figure 7. Rotation can be in either direction. On rotation of the wheel 67, as the pin 69 approaches a slot 77 in the hexagonal plate 75, the proximal surface of the plate 75 adjacent the entry of the slot 77 rides up one of the approach surfaces 73, and onto the raised platform 71 as shown in illustrations A and C of figure 7. This urges the shaft 47 against the spring loading, and draws the window 31 away from the seal 33. As the wheel 67 continues to rotate, the pin 69 co-operating with the slot 77, rotates the hexagonal plate through 60°, to another portion of the window 31. As the pin 69 disengages from the slot 77, and the proximal surface of the plate 75 adjacent the entry of the slot 77 rides down the approach surface 73, the spring-loading again seals the window 31 against the seal 33. A raised segment 81 on the wheel 67 provides registration with curved indents 83 in the hexagonal plate 75, to prevent movement of the window 31 in the normal operation position of the transmissometer.

The transmissometer of the embodiment and invention provides extended operational life, and simple set up and alignment, compared with previous known types. With the alignment as described, the transmitter unit 11 and receiver unit 13 can be aimed approximately when being installed, and fine alignment automatically performed by the on board microprocessors 55. While the mirrors 41 are moved in the embodiment, the entire optical unit could be moved, in an alternative embodiment.

It should be appreciated the scope of the invention is not limited the particular embodiment disclosed herein, and that changes may be made that fall within the spirit and scope of the invention. For example, it is possible to utilise a single transmitter and two or more receivers, with ranges between the receivers set differently, in order to accommodate differing visibility conditions. In such an arrangement, the alignment of the transmitter can be adjusted to direct the beam to the appropriate receiver.

## Claims

1. A visibility transmissometer for installation at an airport, having a light transmitter unit (11) and a light receiver unit (13), the light transmitter unit (11) and the light receiver unit (13) each being contained in a separate housing (25), the light transmitter unit (11) being arranged to transmit light via a light pathway (15) to the light receiver unit (13), the light transmitter unit (11) and the light receiver unit (13) each having an optical device (35, 39) for directing said light pathway (15), said optical devices (35,39) being movable independently from each other by respective mechanisms (43) in at least one plane, **characterised in that** said light transmitter unit (11) and said light receiver unit (13) are mutually connected by a communication link (21), wherein the transmissometer has processor means (55) arranged to control both of said mechanisms (43) through said communications link (21) in order to control the alignment of light transmitted via said light pathway (15) between said light transmitter unit (11) and said light receiver unit (13), said processor means (55) being responsive to the level of light received by said light receiver unit (13) and controlling said mechanisms (43) to optimise target light to said light receiver unit (13), and wherein said transmissometer is provided with an arrangement to redo said alignment under control of the processor means (55) at a time after installation by giving an alignment command.

2. A visibility transmissometer as claimed in claim 1, **characterised in that** either or both of said mechanisms (43) are capable of controlling movement of said optical device (35, 39) in two planes.

3. A visibility transmissometer as claimed in claim 1, **characterised in that** each said optical device (35,39) includes a light reflector (41) located in the light pathway, said light reflector (41) being movable by said mechanism (43) to control the alignment of light transmitted via said light pathway (15) and control the alignment of received light.

4. A visibility transmissometer as claimed in claim 3, **characterised in that** said mechanism (43) is capable of controlling movement of said light reflector (41) in two planes.

5. A visibility transmissometer as claimed in any one of the preceding claims, **characterised in that** said processor means (55) is located in said light transmitter unit (11), and controls said mechanism (43) in said light transmitter unit (11) in response to a light level signal from said light receiver unit (13) transmitted via said communications link (21).

6. A visibility transmissometer as claimed in claim 5, **characterised in that** said processor means (55) includes additional processor means located in said light receiver unit (13), said additional processor means controlling said mechanism (43) in said light receiver unit in response to a light level signal from said light receiver unit (13).

7. A visibility transmissometer as claimed in any one of claims, **characterised in that** said mechanism (43) includes a screw thread drive(s), and alignment is carried out or checked intermittently under control of said processor means (55).

8. Use of a visibility transmissometer at an airport, said transmissometer having a light transmitter unit (11) and a light receiver unit (13), the light transmitter unit (11) and the light receiver unit (13) each being contained in a separate housing (25), said housings being placed a predetermined distance apart, the light transmitter unit (11) being arranged to transmit light via a light pathway (15) to the light receiver unit (13), the light transmitter unit (11) and the light receiver unit (13) each having an optical device (35, 39) for directing said light pathway (15), said optical devices (35,39) being movable independently from each other by respective mechanisms (43) in at least one plane, **characterised in that** said light transmitter unit (11) and said light receiver unit (13) are mutually connected by a communication link (21), wherein the transmissometer has processor means (55) arranged to control both of said mechanisms (43) through said communications link (21) in order to control the alignment of light transmitted via said light pathway (15) between said light transmitter unit (11) and said light receiver unit (13), said processor means (55) being responsive to the level of light received by said light receiver unit (13) and controlling said mechanisms (43) to optimise target light to said light receiver unit (13), whereinsaid alignment is redone under control of the processor means (55) at a time after installation by giving an alignment command.

## Patentansprüche

1. Sichtweite-Transmissometer zur Installation auf einem Flughafen, mit einer Lichtsendeeinheit (11) und einer Lichtempfangseinheit (13), wobei die Lichtsendeeinheit (11) und die Lichtempfangseinheit (13) jeweils in einem separaten Gehäuse (25) enthalten sind, die Lichtsendeeinheit (11) gestaltet ist, um Licht über einen Lichtweg (15) zur Lichtempfangseinheit (13) zu senden, wobei die Lichtsendeeinheit (11) und die Lichtempfangseinheit (13) jeweils eine optische Einrichtung (35, 39) zum Lenken des Lichtwegs (15) aufweisen, die optischen Einrichtungen (35, 39) unabhängig voneinander durch jeweilige Mechanismen (43) in mindestens einer Ebene bewegbar sind, **dadurch gekennzeichnet, dass** die Lichtsendeeinheit (11) und die Lichtempfangseinheit (13) durch eine Kommunikationsverbindung (21) wechselseitig verbunden sind, wobei das Transmissometer ein Prozessormittel (55) zum Steuern der beiden Mechanismen (43) über die Kommunikationsverbindung (21) zum Steuern der Ausrichtung von über den Lichtweg (15) zwischen der Lichtsendeeinheit (11) und der Lichtempfangseinheit (13) gesendetem Licht aufweist, wobei das Prozessormittel (55) auf die Stärke von Licht reagiert, das von der Lichtempfangseinheit (13) empfangen wird, und die Mechanismen (43) zum Optimieren von Ziellicht an der Lichtempfangseinheit (13) steuert, und wobei das Transmissometer mit einer Anordnung zur erneuten Durchführung der Ausrichtung unter der Kontrolle des Prozessormittels (55) zu einem Zeitpunkt nach Installation durch Geben eines Ausrichtebefehls versehen ist.

2. Sichtweite-Transmissometer nach Anspruch 1, **dadurch gekennzeichnet, dass** einer der oder die beiden Mechanismen (43) zum Steuern der Bewegung der optischen Einrichtung (35, 39) in zwei Ebenen fähig ist/sind.

3. Sichtweite-Transmissometer nach Anspruch 1, **dadurch gekennzeichnet, dass** jede optische Einrichtung (35, 39) einen in dem Lichtweg angeordneten Lichtreflektor (41) enthält, wobei der Lichtreflektor (41) von dem Mechanismus (43) bewegbar ist, um die Ausrichtung von Licht, das über den Lichtweg (15) gesendet wird, zu steuern und die Ausrichtung von empfangenen Licht zu steuern.

4. Sichtweite-Transmissometer nach Anspruch 3, **dadurch gekennzeichnet, dass** der Mechanismus (43) zum Steuern der Bewegung des Lichtsreflektors (41) in zwei Ebenen fähig ist.

5. Sichtweite-Transmissometer nach einem der vorangehenden Ansprüche, **dadurch gekennzeichnet, dass** sich das Prozessormittel (55) in der Lichtsendeeinheit (11) befindet und den Mechanismus (43) in der Lichtsendeeinheit (11) als Reaktion auf ein Lichtstärkesignal von der Lichtempfangseinheit (13) steuert, das über die Kommunikationsverbindung (21) gesendet ist.

6. Sichtweite-Transmissometer nach Anspruch 5, **dadurch gekennzeichnet, dass** das Prozessormittel (55) ein zusätzliches Prozessormittel enthält, das sich in der Lichtempfangseinheit (13) befindet, wobei das zusätzliche Prozessormittel den Mechanismus (43) in der Lichtempfangseinheit als Reaktion auf ein Lichtstärkesignal von der Lichtempfangseinheit (13) steuert.

7. Sichtweite-Transmissometer nach einem der Ansprüche, **dadurch gekennzeichnet, dass** der Mechanismus (43) einen Gewindetrieb enthält und die Ausrichtung unter der Steuerung des Prozessormittels (55) intermittierend durchgeführt oder überprüft wird.

8. Verwendung eines Sichtweite-Transmissometers auf einem Flughafen, wobei das Transmissometer eine Lichtsendeeinheit (11) und eine Lichtempfangseinheit (13) aufweist, die Lichtsendeeinheit (11) und die Lichtempfangseinheit (13) jeweils in einem separaten Gehäuse (25) enthalten sind, wobei die Gehäuse in einem vorab festgelegten Abstand voneinander platziert sind, die Lichtsendeeinheit (11) gestaltet ist, um Licht über einen Lichtweg (15) zur Lichtempfangseinheit (13) zu senden, die Lichtsendeeinheit (11) und die Lichtempfangseinheit (13) jeweils eine optische Einrichtung (35, 39) zum Lenken des Lichtwegs (15) aufweisen, die optischen Einrichtungen (35, 39) unabhängig voneinander durch jeweilige Mechanismen (43) in mindestens einer Ebene bewegbar sind, **dadurch gekennzeichnet, dass** die Lichtsendeeinheit (11) und die Lichtempfangseinheit (13) durch eine Kommunikationsverbindung (21) wechselseitig verbunden sind, wobei das Transmissometer ein Prozessormittel (55) zum Steuern der beiden der Mechanismen (43) über die Kommunikationsverbindung (21) zum Steuern der Ausrichtung von Licht gestaltet ist, das über den Lichtweg (15) zwischen der Lichtsendeeinheit (11) und der Lichtempfangseinheit (13) gesendet wird, wobei das Prozessormittel (55) auf die Stärke von Licht, das von der Lichtempfangseinheit (13) empfangen wird, reagiert und die Mechanismen (43) zum Optimieren von Ziellicht an der Lichtempfangseinheit (13) steuert, wobei die Ausrichtung unter der Steuerung des Prozessormittels (55) zu einem Zeitpunkt nach Installation durch Geben eines Ausrichtebefehls erneut durchgeführt wird.

## Revendications

1. Transmissiomètre de mesure de visibilité destiné à être installé dans un aéroport, ledit transmissiomètre comportant une unité formant transmetteur de lumière (11) et une unité formant récepteur de lumière (13), l'unité formant transmetteur de lumière (11) et l'unité formant récepteur de lumière (13) étant chacune contenues dans un boîtier séparé (25), l'unité formant transmetteur de lumière (11) étant destinée à transmettre de la lumière sur un trajet de lumière (15) en direction de l'unité formant récepteur de lumière (13), l'unité formant transmetteur de lumière (11) et l'unité formant récepteur de lumière (13) possédant chacune un dispositif optique (35, 39) destiné à orienter ledit trajet de lumière (15), lesdits dispositifs optiques (35, 39) étant mobiles indépendamment l'un de l'autre par des mécanismes respectifs (43) dans au moins un plan, **caractérisé en ce que** ladite unité formant transmetteur de lumière (11) et ladite unité formant récepteur de lumière (13) sont connectées l'une à l'autre par une liaison de communication (21), le transmissiomètre possédant un moyen formant processeur (55) destiné à commander lesdits mécanismes (43) par le biais de ladite liaison de communication (21) afin de commander l'alignement de la lumière transmise sur ledit trajet de lumière (15) entre ladite unité formant transmetteur de lumière (11) et ladite unité formant récepteur de lumière (13), ledit moyen formant processeur (55) étant sensible au niveau de lumière reçue par ladite unité formant récepteur de lumière (13) et commandant lesdits mécanismes (43) afin d'optimiser la lumière cible en direction de ladite unité formant récepteur de lumière (13), et ledit transmissiomètre étant doté d'une installation destinée à refaire ledit alignement sous le contrôle du moyen formant processeur (55) à un certain moment après l'installation en délivrant une commande d'alignement.

2. Transmissiomètre de mesure de visibilité selon la revendication 1, **caractérisé en ce que** l'un ou l'autre desdits mécanismes (43), ou les deux, sont aptes à commander le mouvement dudit dispositif optique (35, 39) dans deux plans.

3. Transmissiomètre de mesure de visibilité selon la revendication 1, **caractérisé en ce que** chaque dit dispositif optique (35, 39) inclut un réflecteur de lumière (41) placé sur le trajet de lumière, ledit réflecteur de lumière (41) étant mobile grâce auxdits mécanismes (43) afin de commander l'alignement de la lumière transmise sur ledit trajet de lumière (15) et de commander l'alignement de la lumière reçue.

4. Transmissiomètre de mesure de visibilité selon la revendication 3, **caractérisé en ce que** ledit mécanisme (43) est apte à commander le mouvement dudit réflecteur de lumière (41) dans deux plans.

5. Transmissiomètre de mesure de visibilité selon l'une quelconque des revendications précédentes, **caractérisé en ce que** ledit moyen formant processeur (55) est placé dans ladite unité formant transmetteur de lumière (11) et commande ledit mécanisme (43) dans ladite unité formant transmetteur de lumière (11) en réponse à un signal de niveau de lumière provenant de ladite unité formant récepteur de lumière (13) et transmis via ladite liaison de communication (21).

6. Transmissiomètre de mesure de visibilité selon la revendication 5, **caractérisé en ce que** ledit moyen formant processeur (55) inclut un moyen formant processeur supplémentaire placé dans ladite unité formant récepteur de lumière (13), ledit moyen formant processeur supplémentaire commandant ledit mécanisme (43) dans ladite unité formant récepteur de lumière en réponse à un signal de niveau de lumière provenant de ladite unité formant récepteur de lumière (13).

7. Transmissiomètre de mesure de visibilité selon l'une quelconque des revendications, **caractérisé en ce que** ledit mécanisme (43) inclut un ou des entraînements à tige filetée, et l'alignement est effectué ou vérifié en discontinu sous le contrôle dudit moyen formant processeur (55).

8. Utilisation d'un Transmissiomètre de mesure de visibilité dans un aéroport, ledit transmissiomètre possédant une unité formant transmetteur de lumière (11) et une unité formant récepteur de lumière (13), l'unité formant transmetteur de lumière (11) et l'unité formant récepteur de lumière (13) étant chacune contenues dans un boîtier séparé (25), lesdits boîtiers étant placés à une distance prédéterminée l'un de l'autre, l'unité formant transmetteur de lumière (11) étant destinée à transmettre de la lumière sur un trajet de lumière (15) en direction de l'unité formant récepteur de lumière (13), l'unité formant transmetteur de lumière (11) et l'unité formant récepteur de lumière (13) possédant chacune un dispositif optique (35, 39) destiné à orienter ledit trajet de lumière (15), lesdits dispositifs optiques (35, 39) étant mobiles indépendamment l'un de l'autre par des mécanismes respectifs (43) dans au moins un plan, **caractérisé en ce que** ladite unité formant transmetteur de lumière (11) et ladite unité formant récepteur de lumière (13) sont connectées l'une à l'autre par une liaison de communication (21), le transmissiomètre possédant un moyen formant processeur (55) destiné à commander lesdits mécanismes (43) par le biais de ladite liaison de communication (21) afin de commander l'alignement de la lumière transmise sur ledit trajet de lumière (15) entre ladite unité formant transmetteur de lumière (11) et ladite unité formant récepteur de lumière (13), ledit moyen formant processeur (55) étant sensible au niveau de lumière reçue par ladite unité formant récepteur de lumière (13) et commandant lesdits mécanismes (43) afin d'optimiser la lumière cible en direction de ladite unité formant récepteur de lumière (13), ledit alignement étant refait sous le contrôle du moyen formant processeur (55) à un certain moment après l'installation en délivrant une commande d'alignement.
